# EUROPEAN PATENT APPLICATION

(11) **EP 2 533 582 A1**
(43) Date of publication of application: **12.12.2012**
(21) Application number: 11305716.0
(22) Date of filing: 09.06.2011
(51) Int. Cl.: H04W 52/14, H04W 52/24, H04W 52/32

(54) **A method for transmission of reference signals, a base station and a user terminal therefor**

(71) Applicant: Alcatel Lucent, 75007 Paris (FR)
(72) Inventor: Weber, Andreas, 74251 Lehrensteinsfeld (DE); Doetsch, Uwe, 74392 Freudental (DE); Vittone, Pascal, 75009 Paris (FR); Cesar, Bozo, 70439 Stuttgart (DE)
(74) Representative: Kleinbub, Oliver

(57) **Abstract**

The invention concerns a method for transmission of reference signals with a dedicated downlink transmit power for channel estimation from a base station to a user terminal, wherein the dedicated downlink transmit power of the reference signals is controlled per subframe dependent on a channel quality of the user terminal, a base station and a user terminal therefor.

## Description

### Field of the invention

The invention relates to a method for transmission of reference signals with a dedicated downlink transmit power for channel estimation from a base station to a user terminal, and a base station and a user terminal adapted to perform said method.

### Background

In cellular communication networks using standards like e.g. Third Generation Partnership Project Long Term Evolution (3GPP LTE) standard, data can be retransmitted, e.g. by Hybrid Automatic Repeat Request (HARQ), in case of block errors. In contrast, control channels messages, e.g. Physical Downlink Control Channel (PDCCH) messages cannot be retransmitted in case of block errors. Hence, the control channel robustness is the limiting parameter for enhanced features, as e.g. load balancing and biased cell selection, in heterogeneous networks (HetNets) comprising LTE cells with different radio frequency characteristics, as e.g. Macro cells and Pico cells. This fact limits the possible range for handover parameters, cell individual offset (CIO), etc. In heterogeneous networks, the CIO could serve as a means to increase the footprint of a small cell in order to let more users profit from the additional bandwidth introduced into the network by the small cell.

Cell border user terminals with very bad channel conditions could still be served using the most robust modulation and coding scheme (MCS) for data transport blocks, if, at the same time, the control channel could be received with an acceptable block error probability.

### Summary

The object of the invention is thus to propose a method for transmission between a base station and user terminals with reduced error rate of the control channel, thus offering e.g. an increased footprint of a small cell in a heterogeneous network.

According to the prior art, control channels in LTE are adapted to the current channel quality by using an appropriate code rate. However, for channel qualities below -3 to -7 dB, the block error rate of the control channel is not acceptable. For scenarios with load balancing or HetNets with bias used for small cells, user terminals located at the cell border may have worse channel conditions with inacceptable control channel block error rates. A reduction of the control channel block error rates can be achieved by means of increasing the downlink transmit power. In LTE fast PDCCH power control is possible due to the used Quadrature Phase Shift Keying (QPSK) format. However, this power control implies to have some power in reserve. Also, it does not involve fast power control of reference signals. Consequently, due to the power control of data symbols of the control channel only, a suboptimal gain is obtained.

In LTE Release 8, it is also possible to boost the reference signals and to inform the user terminals about the transmit power of the reference signals by higher layer signaling using the Radio Resource Control message SystemInformationBlockType2, but the disadvantage is, that the signaling is quite slow with a minimum interval between SystemInformationBlockType2 messages being 80 ms, and therefore boosting of reference signals can be enabled for several subframes, but not for one subframe only.

The disadvantages of boosting are the additional interference for the neighbor cells and the fact that by boosting the reference signals, the transmit power for the data signals has to be reduced or some data signals in a subframe cannot be used at all. Therefore reference signal boosting shall be performed in those subframes where it is beneficial only.

According to the invention, a new downlink transmission scheme for transmission from a base station to a user terminal is proposed, in which the downlink transmit power of signals in a control region of a subframe, as e.g. reference signals or control signals, is controlled dependent on a channel quality of the user terminal on a per subframe timescale.

The object is thus achieved by a method for transmission of reference signals with a dedicated downlink transmit power for channel estimation from a base station to a user terminal, wherein the dedicated downlink transmit power of the reference signals is controlled per subframe dependent on a channel quality of the user terminal.

The object is furthermore achieved by a base station for transmission of reference signals with a dedicated downlink transmit power for channel estimation from the base station to a user terminal, wherein the base station comprises at least one processing means which is adapted to control the dedicated downlink transmit power of the reference signals per subframe dependent on a channel quality of the user terminal.

The object is furthermore achieved by a user terminal for transmission between a base station and the user terminal, wherein the user terminal comprises at least one processing means which is adapted to receive information per subframe related to the dedicated downlink transmit power of at least one reference signal, and to use said information to enhance the demodulation performance.

The invention is described in the following within the framework of 3GPP LTE, however as the invention is not restricted to 3GPP LTE, but can in principle be applied in other networks that apply Orthogonal Frequency Division Multiplexing (OFDM) with a subframe structure and transmission of reference signals and control signals in downlink, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows exemplarily the downlink transmit power of reference signals, control data and user data, with boosting of reference signals in several consecutive subframes according to the prior art.
Fig. 4 schematically shows exemplarily the downlink transmit power of reference signals, control data and user data, with boosting of reference signals and control data in the control region of a single subframe according to an embodiment of the invention.
Fig. 5 schematically shows exemplarily the downlink transmit power of reference signals, control data and user data, with boosting of reference signals and control data in a single subframe according to an embodiment of the invention.

### Description of the embodiments

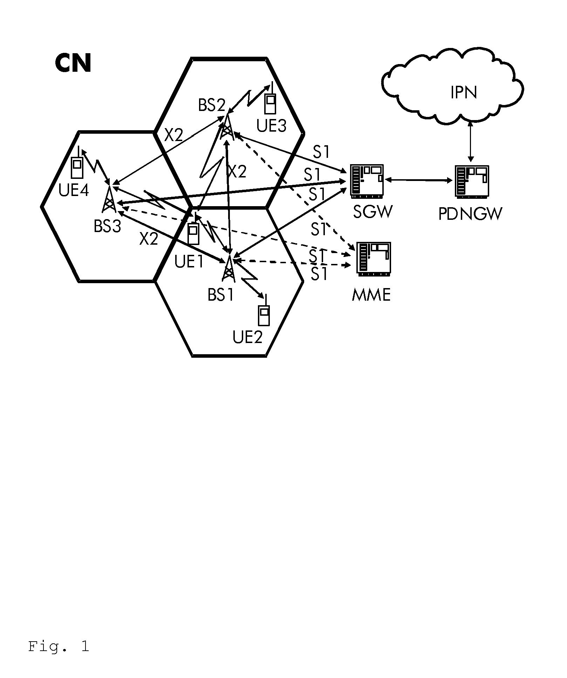

Fig. 1 shows as an example of a communication network in which the invention can be implemented a communication network CN according to the standard 3GPP LTE.

Said communication network CN comprises base stations BS1-BS3, user terminals UE1-UE4, a serving gateway SGW, a packet data network gateway PDNGW, and a mobility management entity MME.

Each of said user terminals UE1-UE4 is connected via radio connections to one or multiple of said base stations BS1-BS3, which is symbolized by flashes in fig. 1. The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between a base station BS1-BS3, i.e. an eNodeB in this example, and the Evolved Packet Core (EPC). The S1 interface has two flavours, S1-MME for exchange of signalling messages between the base station BS1-BS3 and the mobility management entity MME and S1-U for the transport of user datagrams between the base station BS1-BS3 and the serving gateway SGW.

The X2 interface is added in 3GPP LTE standard primarily in order to transfer the user plane signal and the control plane signal during handover.

The serving gateway SGW performs routing of the IP user data between the base station BS1-BS3 and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal (UE1-UE4) and the respective serving base station (BS1-BS3).

The mobility management entity MME performs tasks of the subscriber management and the session management, and also performs the mobility management during handover between different access networks.

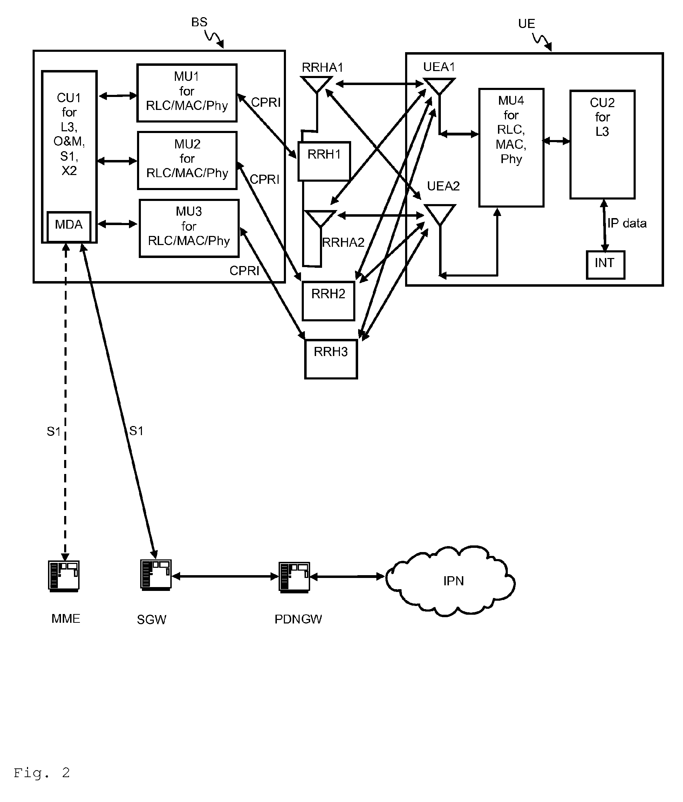

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity of different media like e.g. video streaming or web browsing.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

In the sequel, the usage of OFDM symbols in subframes for transmission of reference signals and control and user data between a base station and a user terminal according to the prior art and according to embodiments of the invention is described.

In principle, the invention is applicable to OFDM based systems supporting reference signals for decoding, a control channel, a data channel and a time framing.

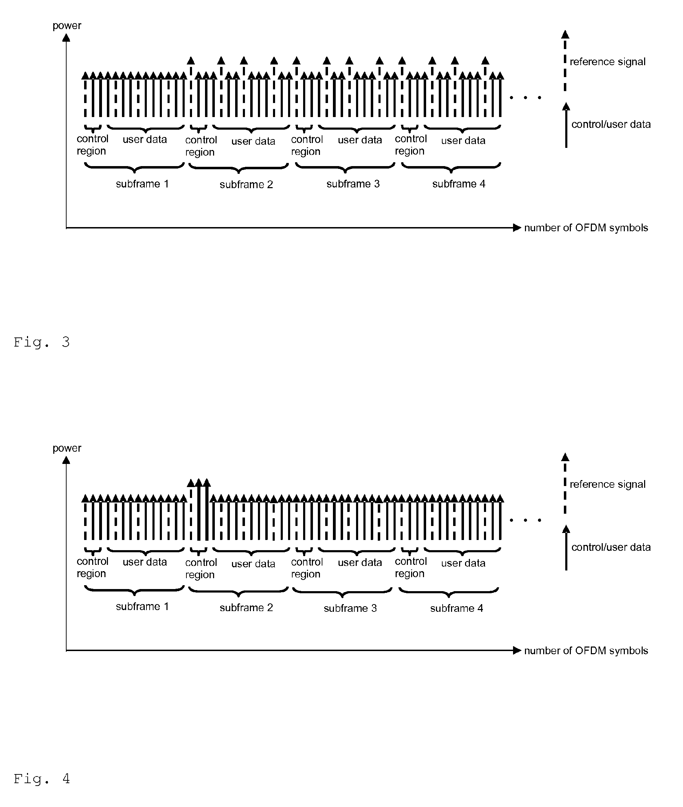

Fig. 3 schematically shows exemplarily the downlink transmit power of reference signals, control data and user data, with boosting of reference signals in several consecutive subframes according to the prior art.

In LTE, each frame is subdivided into 10 subframes, and each subframe in turn comprises 14 OFDM symbols. The downlink system bandwidth in LTE may e.g. for a bandwidth of 10MHz consist of 50 resource blocks, each resource block in turn consisting of 12 subcarriers.

In fig. 3, OFDM symbols of four subframes for only one subcarrier are depicted for the sake of simplicity. As according to 3GPP LTE 1 to 4 OFDM symbols can be reserved for the control region PDCCH, in the example depicted in fig. 3, the first 3 OFDM symbols of each subframe together build the control region, which is used for transmission of reference signals and control data. The additional OFDM symbols, in this example 11 OFDM symbols, of each subframe are used for transmission of reference symbols and user data.

Reference signals, as e.g. the so-called cell-specific reference signals (CRS), are transmitted in every subframe, and can be used for channel estimation for coherent demodulation of downlink transmission, and for cell-search measurements, both for neighbour-cell measurements for handover and for measurements before initial access.

As already mentioned above, in LTE release 8 it is also possible to boost the reference signals in downlink and to inform the user terminals about the transmit power of the reference signals by higher layer signalling, but the disadvantage is, that the signaling is quite slow and therefore boosting of reference signals can be enabled for several subframes, but not for one subframe only. In fig. 3, boosting of reference signals is exemplarily depicted for subframes 2, 3 and 4.

The disadvantages of boosting are the occuring additional interference for the neighbor cells and the fact that by boosting the reference signals, the transmit power in downlink for the data signals has to be reduced, or some data signals in a subframe cannot be used at all. Therefore reference signal boosting shall be performed in those subframes where it is beneficial only.

In the embodiment depicted in fig. 3, it is assumed that a user terminal with very bad channel conditions e.g. in the cell border area, as e.g. user terminal UE1 in fig. 1, is scheduled for downlink transmission in subframe 2 only. Thus, it is not beneficial to apply reference signal boosting as in the prior art also in subframes 3 and 4.

According to an embodiment of the invention, in case of user terminals with bad channel conditions, for which control information are sent in a control channel, the reference signals and control data in the control region of the considered subframe only are boosted in order to support the demodulation of the subframe's control channel and data channel messages.

Fig. 4 schematically shows exemplarily the downlink transmit power of reference signals, control data and user data, with boosting of reference signals and control data in the control region of a single subframe according to the embodiment of the invention.

It is assumed, that a user terminal with very bad channel conditions e.g. in the cell border area, as e.g. user terminal UE1 in fig. 1, is scheduled for downlink transmission in subframe 2 only. Thus, according to the embodiment of the invention, boosting of reference signals and control data is applied in the control region of subframe 2 only.

As user data can be retransmitted applying HARQ when standards like 3GPP LTE are used, boosting of reference signals in the user data region of subframe 2 in order to increase the quality of channel estimation for coherent demodulation of downlink transmission is not necessarily needed.

In principle, the downlink transmit power of reference signals or control data is controlled dependent on the channel quality of the respective user terminal, which is defined as symbol energy per noise density, and which is determined e.g. by means of reference signals. The lower the channel quality of the respective user terminal is, the higher the downlink transmit power of reference signals or control data must be in order to achieve an acceptable block error probability of a control channel.

A correlation between channel quality and appropriate downlink transmit power of reference signals or control data can be determined e.g. by means of simulations or measurements. First, the required channel quality for a target block error probability is determined, and then, the downlink transmit power of reference signals or control data needed to achieve the required channel quality is determined.

In an alternative of the embodiment of the invention depicted in fig. 4, only the reference signals and not the control data in the control region of the considered subframe are boosted in order to support the demodulation of the subframe's control channel and data channel messages. This has the advantage of a reduced interference, with the tradeoff of a slightly increased block error probability for the control data.

According to another embodiment of the invention, in case of user terminals with bad channel conditions, for which control information are sent in a control channel, it is moreover proposed that downlink transmit power control of reference signals refers to all reference signals of the considered subframe, i.e. all reference signals of the considered subframe are boosted in order to support the demodulation of the subframe's control channel and data channel messages. By means of boosting all reference signals in the considered subframe, the accuracy of channel estimation for the user data region is also increased, leading to a reduced block error probability for the user data.

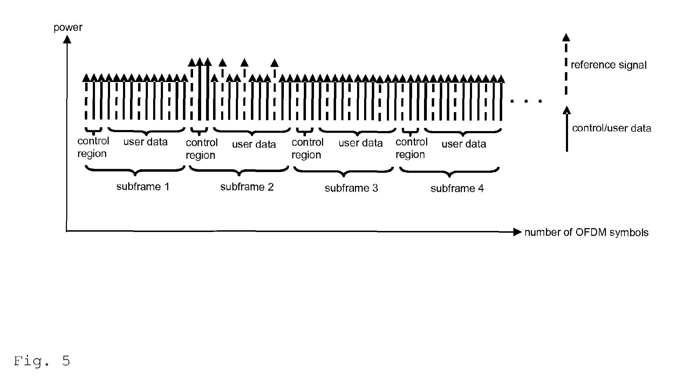

Fig. 5 schematically shows exemplarily the downlink transmit power of reference signals, control data and user data, with boosting of reference signals and control data in a single subframe according to the other embodiment of the invention.

As in the embodiment depicted in fig. 4, it is assumed, that a user terminal with very bad channel conditions e.g. in the cell border area, as e.g. user terminal UE1 in fig. 1, is scheduled for downlink transmission in subframe 2 only. Thus, according to the embodiment of the invention depicted in fig. 5, boosting of reference signals and control data is applied over the whole subframe 2.

Although user data can be retransmitted applying HARQ when standards like 3GPP LTE are used, boosting of reference signals in the user data region of subframe 2 in order to increase the quality of channel estimation for coherent demodulation of downlink transmission is advantageous, as this leads to a reduced block error probability of user data.

The invention as described above is especially useful for small cells in LTE or LTE Advanced heterogeneous networks, as they often serve only a low number of user terminals. If there are only a small number of user terminals allocated to the small cell, not all resource elements of every OFDM symbol of the control region are used. In this case, the downlink transmit power of control channel messages addressed to user terminals with bad channel conditions that already use the most robust code rate for their control channel transmission is increased, while maintaining the maximum power of the transmitter. In the same subframe, the reference signals are boosted, either only in the control region of the subframe as shown in fig. 4, or in the whole subframe as shown in fig. 5. This reduces the control channel block error rate and also the user data block error rate to a reasonable level.

In case of a higher number of user terminals allocated to the cell, the scheduler of the base station has to take care that only a low number of user terminals are addressed in case one of the addressed user terminals has bad channel conditions, thus enabling the increase of downlink transmit power for reference signals and preferably also of control data in a subframe.

In alternatives of the embodiments described above, the allocation of downlink transmit power to resource blocks or control channel elements of at least one further user terminal, as e.g. user terminal UE2 with better channel conditions than user terminal UE1 located in the cell border area, is reduced if the dedicated downlink transmit power of the reference signals or the control signals from the base station BS1 to the user terminal UE1 is boosted. Thus, a higher power allocation to the user terminal UE1 is possible with maintaining at the same time a maximum power constraint.

In other alternatives of the embodiments described above, the number of resource blocks or control channel elements used for downlink transmission is chosen in such a way, that the overall downlink transmit power is below a maximum available power. For example, broadcast control channel messages can be boosted when, at the same time, a scheduler in the base station takes care that not the whole bandwidth is used for other downlink transmissions.

In further alternatives of the embodiments described above, the control region for control signaling of a subframe comprises more resource elements than necessary for control signaling, so that a higher power budget for reference signals or control signaling in downlink is available.

In order to enhance the demodulation performance for downlink control data or user data transmissions of a subframe, for the same subframe, the reference signal power allocation or the control data power allocation is signaled preferably via a robust control channel message from the base station to the user terminal. In the control channel message, information about the downlink transmit power or the boost value are comprised. For the downlink transmit power or the boost value, only a few steps are required, as e.g. 0dB, 3dB, 6dB, 9dB for the boost value. Furthermore, the control channel message preferably comprises information, if all reference signals in the subframe are boosted or only those reference signals located in the control region of the subframe. For the control channel message, e.g. a new common Downlink Control Information (DCI) format could be defined which broadcasts the signaling information described above to all user terminals in the cell.

Using said signaling information, user terminals are able to use reference symbols in the control region and the user data region of the subframe in order to enhance channel measurements required for the demodulation of control data and user data transmissions and for the generation of channel quality information feedback.

In an embodiment of the invention, a scheduler in the base station restricts the modulation scheme for downlink transmission to QPSK during subframes with temporary reference signal boosting, as with the robust modulation scheme QPSK, the probability for an error-free demodulation in the user terminal is high.

## Claims

1. A method for transmission of reference signals with a dedicated downlink transmit power for channel estimation from a base station (BS1) to a user terminal (UE1), wherein the dedicated downlink transmit power of the reference signals is controlled per subframe dependent on a channel quality of the user terminal (UE1).

2. A method according to claim 1, wherein only the dedicated downlink transmit power of reference signals in a control region for control signaling of a subframe is controlled per subframe dependent on the channel quality of the user terminal (UE1) .

3. A method according to any of the preceding claims, wherein also a dedicated downlink transmit power of control signals transmitted from the base station (BS1) to the user terminal (UE1) is controlled per subframe dependent on the channel quality of the user terminal (UE1) **.**

4. A method according to any of the preceding claims, wherein an allocation of downlink transmit power to resource blocks or control channel elements of at least one further user terminal (UE2) is reduced if the dedicated downlink transmit power of the reference signals or the control signals from the base station (BS1) to the user terminal (UE1) is boosted.

5. A method according to any of the preceding claims, wherein a number of resource blocks or control channel elements used for downlink transmission is chosen in such a way, that the overall downlink transmit power is below a maximum available power.

6. A method according to any of the preceding claims, wherein the control region for control signaling of a subframe comprises more resource elements than necessary for control signaling, so that a higher power budget for reference signals or control signaling in downlink is available.

7. A method according to any of the preceding claims, wherein information per subframe related to the dedicated downlink transmit power of at least one reference signal or control data is transmitted in downlink via at least one control channel message.

8. A method according to claim 7, wherein said information comprises the dedicated downlink transmit power of the at least one reference signal or control data, or information, if all reference signals of a subframe are boosted, or only reference signals in a control region of the subframe.

9. A method according to claim 7 or 8, wherein said information is broadcast to user terminals (UE1, UE2) of a cell using a downlink control information message common to all the user terminals of the cell.

10. A method according to any of the preceding claims, wherein a modulation scheme is restricted to quadrature phase shift keying for downlink transmission in subframes with a dedicated downlink transmit power of at least one reference signal above a predefined threshold.

11. A base station (BS1) for transmission of reference signals with a dedicated downlink transmit power for channel estimation from the base station (BS1) to a user terminal (UE1), wherein the base station (BS1) comprises at least one processing means which is adapted to control the dedicated downlink transmit power of the reference signals per subframe dependent on a channel quality of the user terminal (UE1) **.**

12. A user terminal (UE1) for transmission between a base station (BS1) and the user terminal (UE1), wherein the user terminal (UE1) comprises at least one processing means which is adapted to receive information per subframe related to the dedicated downlink transmit power of at least one reference signal, and to use said information to enhance the demodulation performance.

13. A communication network (CN) comprising at least one base station (BS1) according to claim 11.
